# EUROPÄISCHE PATENTSCHRIFT

(11) **EP 2 531 017 B1**
(45) Veröffentlichungstag und Bekanntmachung des Hinweises auf die Patenterteilung: **22.05.2019**
(21) Anmeldenummer: 11713469.2
(22) Anmeldetag: 04.02.2011
(51) Int. Cl.: A01G 5/00, A01G 3/00, B26B 27/00

(54) **BLUMENANSCHNEIDER**
FLOWER TRIMMER
DISPOSITIF DE COUPE EN BISEAU DES TIGES DE FLEURS

(30) Priorität: 07.02.2010 DE 202010001947 U; 07.09.2010 DE 202010012285 U; 22.11.2010 DE 202010015625 U
(43) Veröffentlichungstag der Anmeldung: 12.12.2012
(73) Patentinhaber: Mayer, Frank F. E., 67098 Bad Dürkheim (DE)
(72) Erfinder: Mayer, Frank F. E., 67098 Bad Dürkheim (DE)
(74) Vertreter: Wesch, Arno
(86) Internationale Anmeldenummer: PCT/EP2011/000512
(87) Internationale Veröffentlichungsnummer: WO 2011/095340

(56) Entgegenhaltungen:
- EP-A1- 0 021 493
- EP-A1- 0 383 407
- DE-A1-102004 040 153
- DE-C1- 10 063 809
- NL-A- 8 104 605
- US-A- 2 472 528

## Beschreibung

Die Erfindung bezieht sich auf einen Blumenanschneider gemäß den im Oberbegriff des Anspruchs 1 angegebenen Merkmalen.

Ferner ist aus der EP 0 021 493 A1 ein als Handgerät ausgebildeter Blumenanschneider mit einem Kopf bekannt, welcher am vorderen Ende eine Öffnung aufweist und an diese anschließend einen Hohlraum enthält. In dem Hohlraum ist eine Klinge mit einer Schneide angeordnet, wobei ein durch die genannte Öffnung in den Hohlraum eingeführter Endbereich eines Blumenstils an die Schneide herangeführt und durch eine an einem Handgriff eingeleitete Zugkraft an- oder abschneidbar ist. Der Handgriff wird durch die Außenflächen des Kopfes gebildet. Der Handgriff und der Kopf sind eine integrale Baueinheit, also keine voneinander beabstandet angeordnete Komponenten des Blumenanschneiders.

Ferner ist aus der DE 31 40 280 A1 ein als Handgerät ausgebildeter Blumenanschneider bekannt, welcher einen Handgriff und einen Kopf mit einer Klinge aufweist, an welche der Blumenstiel einer Schnittblume heranführbar ist. Die Klinge bzw. deren Schneide ist schräg zur Längsachse des Handgriffes angeordnet, und zwischen der Klinge und dem Handgriff ist ein seitlicher Schlitz vorhanden, in welchen ein Blumenstiel von der Seite her einführbar und an die Klinge heranführbar ist. Durch Ziehen bzw. Einleiten einer Zugkraft am Handgriff in Richtung weg von der Blume kann ein Endbereich des Blumenstiels angeschnitten bzw. abgeschnitten werden. Hierbei kann jedoch der Blumenstiel seitlich ausweichen mit der Folge eines unvollständigen Schnittes oder einer unerwünschten Beschädigung des Blumenstiels. Auch ist das An- oder Abschneiden von Schnittblumen, welche bereits zu einem Blumenstrauß gebunden sind, recht schwierig und mit einem nicht unerheblichen Zeitaufwand verbunden.

Hiervon ausgehend liegt der Erfindung die Aufgabe zugrunde, den Blumenanschneider der genannten Art mit einem geringen konstruktiven Aufwand dahingehend weiter zu bilden, dass bei einfacher Handhabung das Anschneiden und/oder Abschneiden von Blumenstielen problemlos durchgeführt werden kann. Des Weiteren soll die Ergonomie beim Heranführen des Blumenstiels an die Klinge sowie beim Schneiden verbessert werden.

Die Lösung dieser Aufgabe erfolgt gemäß den Merkmalen des Patentanspruchs 1.

Der erfindungsgemäße Blumenanschneider zeichnet sich durch einen einfachen und funktionsgerechten Aufbau aus und ermöglicht eine einfache Handhabung. Der Blumenstiel wird in eine am vorderen freien Ende des Kopfes angeordnete Öffnung im Wesentlichen axial eingeführt und beim weiteren Einführen sowie vor allem beim Schneiden wird ein seitliches Ausweichen der Blumenstiele mittels des Kopfes unterbunden. Mittels der im Kopf des Blumenanschneiders im Bereich der Klinge vorgesehenen Längsführung kann ein Blumenstielende in einfacher Weise leicht an die Klinge herangeführt werden und ferner wird beim schrägen An- und/oder der Abschneiden ein ordnungsgemäßer Schnitt zuverlässig erreicht. Der in der Floristik von Fachleuten, beispielsweise Gärtnern oder Blumenverkäufern, ebenso wie von Laien üblicherweise verwendete Begriff "Anschneiden" beinhaltet das vollständige Abschneiden des Endes, gegebenenfalls auch eines großen Teils des Blumenstiels mit schräg zur Längsachse des Blumenstiels verlaufender Schnittebene. Die Längsführung ist bevorzugt als eine zum Kopfende hin offene Nut ausgebildet, wobei über dieser Nut die Klinge bzw. deren Schneide sich befindet. Bevorzugt bestehen der Handgriff, der verjüngte Bereich und der Kopf aus Kunststoff und sind gemeinsam einstückig ausgebildet. Die Klinge ist vorteilhaft derart angeordnet, dass die durch den Handgriff verlaufende Längsachse zumindest näherungsweise durch die Schneide verläuft, wodurch eine optimale Einleitung der manuell aufgebrachten Zugkraft gewährleistet wird und ein unerwünschtes Abgleiten, sei es in Längsrichtung oder quer vermieden und ein glatter Schnitt erreicht wird.

Weiterhin ist in bevorzugter Weise im Bereich der Längsführung und/oder der genannten Nut eine Schräge oder Kurve derart vorgesehen, dass ein Heranführen des Blumenstiels an die Schneide unterstützt wird. Die Kurve oder Schräge ist im Kopf angeordnet und/oder ist der Auslauf und/oder Übergang der Längsführung nach außen. Beim Einführen des Blumenstiels in den Kopf wird hierdurch der Blumenstiel derart gebogen, dass der Blumenstiel ähnlich einer Feder an die Schneide herangeführt wird. Von besonderem Vorteil erweist sich eine S-Kurve bzw. eine Doppel-S-Wellung bzw. U-förmige Führung, welche dann auch in eine Doppel-S-Führung übergeht, wodurch ein Blumenstiel gut in beiden Richtung gezogen und gedrückt werden kann. Aufgrund der Längsführung und insbesondere in Kombination mit der vorgenannten Schräge oder S-Kurve bzw. Doppel-S-Wellung wird die Handhabung erheblich verbessert, wobei keine besondere Handfertigkeit oder Erfahrung vorausgesetzt wird. Die Klinge ist insbesondere mittels zweier Schrauben oder anderer Verbindungsmittel mit dem Kopf des Blumenanschneiders lösbar verbunden und kann somit bei Bedarf ohne Weiteres ausgetauscht werden.

Die Klinge kann in zwei Versionen ausgebildet sein, welche wahlweise mit dem Kopf des Blumenanschneiders verbunden werden können. In der ersten Version ist die Klinge im Wesentlichen gleich breit wie der Kopf und in einer zweiten Version ragt die Klinge auf einer Seite aus dem Kopf heraus, wobei dort gleichfalls die Schneide vorhanden ist. Die zweite Version ist für ein optimales Handling beim Entdornen und Entblättern und ferner auch zum schrägen Anschneiden, insbesondere Abschneiden von Blumenstielen geeignet. Der Kopf weist zumindest im Bereich der Klinge seitlich bevorzugt halbmondförmige oder bauchförmige Erweiterungen auf, welche zur Aufnahme bzw. Verankerung der Schrauben oder sonstiger Verbindungselemente der Klinge vorgesehen sind. Abgesehen von der Öffnung und/oder der Längsführung weist der Kopf eine geschlossene und/oder im Wesentlichen glatt ausgebildete Außenfläche auf. Hierdurch wird insbesondere bei gebundenen Blumensträußen die Handhabung weiter verbessert.

Besondere Ausgestaltungen und Weiterbildungen sind in den Unteransprüchen und der nachfolgenden Beschreibung von Ausführungsbeispielen angegeben.

Die Erfindung wird nachfolgend anhand der in der Zeichnung dargestellten Ausführungsbeispiele näher erläutert, ohne dass insoweit eine Beschränkung erfolgt. Es zeigen:
- Fig. 1: eine Ansicht des Blumenanschneiders in Richtung auf die Vorderseite,
- Fig. 2: eine Seitenansicht,
- Fig. 3: eine perspektivische Darstellung,
- Fig. 4: eine Ansicht in Richtung des Pfeiles A gemäß Fig. 1,
- Fig. 5: eine Ansicht entsprechend Fig. 1, jedoch mit einer seitlich verlängerten Klinge,
- Fig. 6: eine Ansicht in Blickrichtung B gemäß Fig. 5,
- Fig. 7: einen Längsschnitt durch den Blumenanschneider,
- Fig. 8: eine Ansicht entsprechend Fig. 1, jedoch ohne Klinge,
- Fig. 9: Schnitte quer zur Längsachse entlang Schnittlinien a, b, c, d,
- Fig. 10 - 12: Ansichten einer besonderen Ausgestaltung des erfindungsgemäßen Blumenanschneiders.

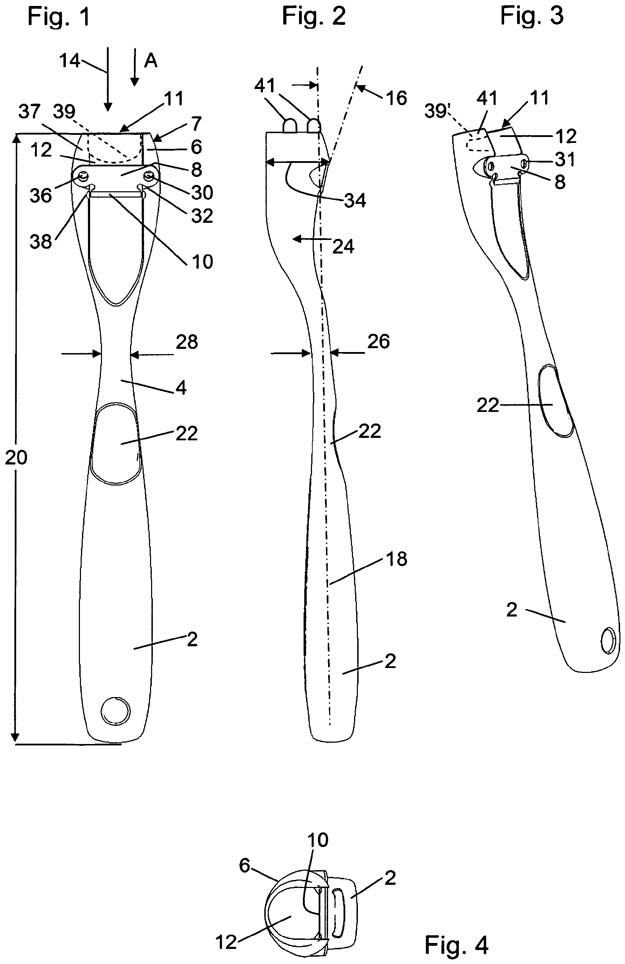

Wie in Fig. 1 bis Fig. 4 dargestellt, enthält der Blumenanschneider einen Handgriff 2, einen verjüngten Bereich 4 sowie einen Kopf 6, welche einstückig insbesondere aus Kunststoff gefertigt sind. Der Blumenanschneider, insbesondere der Handgriff 2, sind ergonomisch geformt und er weist eine weitgehend glatte Oberfläche auf, wobei die Außenkonturen abgerundet ausgebildet sind und insbesondere Kanten oder sprungartige Übergänge vermieden sind. An der Vorderseite gemäß Fig. 1 ist am Kopf 6 eine Klinge 8 mit einer Schneide 10 befestigt. Am vorderen Ende 7 des Kopfes 6 ist eine Öffnung 11 vorhanden, an welche axial nach innen ein Hohlraum 12 anschließt, welcher insbesondere als quer zur Längsachse 18 offene Nut 12 ausgebildet ist. Durch die Öffnung 11 hindurch in den Hohlraum 12 hinein kann ein Blumenstiel in axialer Richtung hineingeschoben werden, wobei der Hohlraum 12 eine Führung bildet. Erfindungsgemäß ist in den Hohlraum bzw. die Längsführung 12 in Richtung des Pfeiles 14 das Ende eines Blumenstiels einführbar.

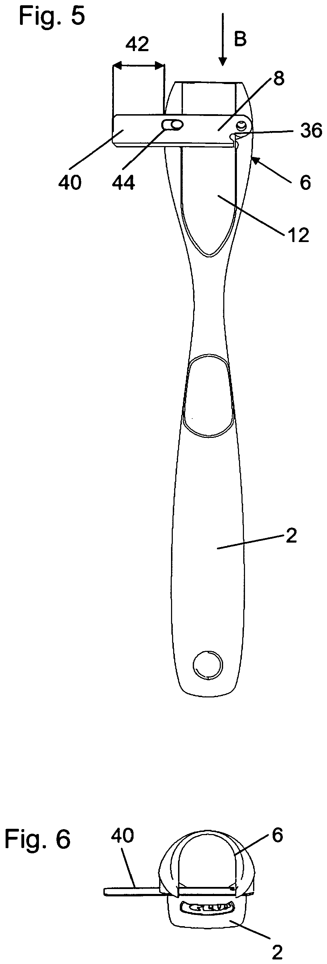

Die Klinge 8 übergreift die Längsführung 12 und ist in einem Winkel 16 zur Längsachse 18 des Handgriffs angeordnet, wobei die Schneide 10 in Richtung zum Handgriff 2 weist. Der Winkel 16 ist im Bereich zwischen 8 bis 18°, bevorzugt zwischen 10 bis 15°, insbesondere zumindest näherungsweise im Bereich von 12° vorgegeben. Der Blumenanschneider besitzt eine Länge 20, welche vorteilhaft im Bereich von 12 bis 18 cm, bevorzugt im Bereich zwischen 14 bis 17 cm und insbesondere zumindest näherungsweise 15 cm vorgegeben ist. Der Handgriff 2 enthält an der Vorderseite eine konkave Einbuchtung 22 für den Daumen einer Hand, wobei durch mehr oder weniger Daumendruck der Schneidwinkel der Klinge verändert werden kann. Zweckmäßig ist die Einbuchtung ergonomisch ausgebildet. Insbesondere durch den verjüngten Bereich 4 weist der Blumenanschneider eine hinreichende Flexibilität und/oder Elastizität derart auf, dass der Kopf 6 zum Handgriff 2 in einem vorgegebenen Winkel bewegbar ist, wie mit dem Pfeil 24 angedeutet. Der verjüngte Bereich ist zweckmäßig im Querschnitt halbmond-, halbkreis-, rechteck-, U- oder ovalförmig derart ausgebildet, dass gemäß der Seitenansicht (Fig. 2) die Materialdicke 26 geringer ist als die Materialdicke 28 gemäß der Frontansicht (Fig. 1). Alternativ kann der verjüngte Bereich 4 auch in mehrere Verjüngungen unterteilt sein. Aufgrund des verjüngten Bereiches 4 bzw. auch mehrerer Verjüngungen wird die gewünschte Elastizität im Hinblick auf die erläuterte Bewegbarkeit des Kopfes 6 vorgegeben. Wie nachfolgend anhand von Fig. 5 noch erläutert wird, wird andererseits im Falle einer seitlich herausstehenden Klinge hinreichend Stabilität, und zwar sowohl für Rechts- als auch für Linkshänder vorgegeben, damit die seitliche Klinge sich nicht nach hinten, als entgegen der Zugrichtung beim Schneiden durchbiegt und/oder eine unerwünschte Ausweichbewegung bedingt.

Die Klinge 8 ist im Kopf mittels Befestigungselementen 30 festgelegt, welche grundsätzlich als Schrauben ausgebildet sind, welche durch zugeordnete Bohrungen 31 der Klinge 8 durchgreifen, um bei Bedarf die Klinge 8 vom Kopf 6 lösen und austauschen zu können. Wie aus Fig. 1 ersichtlich, enthält der Kopf 6 im Bereich der Klinge 8 seitliche Erweiterungen 32, welche bevorzugt halbmondförmig oder bauchförmig ausgebildet sind. Die Außenkontur des Kopfes 8 ist im Frontbereich im Wesentlichen konvex und/oder abgerundet ausgebildet, so dass bei gebundenen Blumensträußen der Blumenanschneider an benachbarten Blumenstielen gut vorbeikommen kann. Wie ferner aus der Seitenansicht (Fig. 2) gut ersichtlich, weist der Kopf 6 eine vergleichsweise geringe Tiefe 34 auf, ebenfalls im Hinblick auf ein problemloses Einführen des Kopfes zu Blumenstielen eines gebundenen Blumenstraußes.

Die Klinge 8 enthält zwischen der Schneide 10 und dem Auflagebereich auf dem Kopf bzw. dessen Erweiterung 32 eine Aussparung 36. Mittels der Aussparung 36 wird erreicht, dass sich keine Pflanzenfasern zwischen der Klinge und dem Material, insbesondere Kunststoff, des Kopfes verheddern. Aus dem gleichen Grund enthält ferner in vorteilhafter Weise auch der Kopf 6 in diesem Bereich und/oder seitlich neben der Schneide eine Aussparung 38. Von weiterer Bedeutung ist, dass die Klinge 8 sehr dünn ausgebildet ist, und bevorzugt eine Dicke im Bereich von 0,1 bis 0,8 mm, insbesondere im Bereich von 0,15 bis 0,6 mm aufweist. Derart dünne Klingen gleiten sehr leicht durch einen Blumenstiel und sind zudem recht elastisch, wobei in Folge dieser Elastizität der Bruch des harten Materials, insbesondere spröder Rasiermesserstahl, vermieden werden kann.

In einer alternativen Ausgestaltung ist zur Festlegung der Klinge ohne ein Werkzeug und ohne Schrauben ein Schnellwechselsystem vorgesehen. Hierbei wird die Klinge in den Kopf durch Biegung in eine zugeordnete Aufnahme eingelegt und durch Geradeziehen wird ein Halten in einer Endposition erzwungen. Ferner sorgen Aussparungen in der Klinge für einen sicheren Sitz der Klinge im Kopf. Ferner können zur Festlegung Filmscharniere oder dergleichen vorgesehen sein.

Eine besondere Ausgestaltung der Erfindung ist in den Fig. 1 bis 3 mittels gestrichelten Linien dargestellt, nämlich wenigstens eine oder mehrere Kerben 39, 39' im Bereich des vorderen Endes 7 des Kopfes 6. Diese Kerben 39, 39' durchdringen das Material des Kopfes 6 am vorderen Ende 7 vollständig von der radialen Außenfläche bis in den Hohlraum 12. Die eine oder mehrere Kerben 39, 39' weisen in bevorzugter Weise abgerundete Konturen auf, beispielsweise gemäß Fig. 1 halbkreisförmig, wobei im Rahmen der Erfindung gegebenenfalls auch parabelförmige oder ovale Konturen oder dergleichen vorgesehen sein können. Ausgehend von der Vorderkante des Kopfes 6 erstrecken sich die eine oder mehrere Kerben 39, 39' in Richtung zum Handgriff 2. Sind bezogen auf die Längsachse in Umfangsrichtung wenigstens zwei derartige Kerben 39, 39' nebeneinander angeordnet, so befinden sich in Umfangsrichtung zwischen diesen und/oder zum Hohlraum 12 hin Stege 37, welche bezogen auf die Längsachse 18 auch als seitliche Hörnchen oder Zähne 41 bezeichnet werden. Alternativ können im Rahmen der Erfindung derartige Stege 37 oder Zähne 41 über die Vorderkante des Kopfes 6 vorstehend angeordnet sein, wie in Fig. 2 angedeutet. Durch Verdrehen des Blumenstiels bezüglich des Blumenanschneiders um die Längsachse 18 können somit in besonders vorteilhafter Weise, insbesondere bei Rosen, deren Dornen seitlich abgedrückt und/oder gänzlich entfernt werden.

Fig. 5 und 6 zeigen eine Ausführungsform, deren Klinge 8 mit einem Teil 40 in einer vorgegebenen Länge 42 seitlich über die Außenkontur des Kopfes 6 vorsteht bzw. verlängert ist. Diese Ausführungsform ist besonders für Profi-Floristen geeignet, um Blätter und Dornen entfernen zu können oder auch sehr dickstielige Blumen anschneiden zu können. Hingegen ist die eingangs erläuterte Ausführungsform besonders für Kunden geeignet, welche vom Floristen in der Regel schon entdornte Blumen bzw. Rosen erhalten und den Blumenanschneider zu Hause lediglich zum Kürzen, insbesondere gebundener Blumensträuße benutzen. Hierbei wäre die seitliche Verlängerung nachteilig und zudem eine Verletzungsgefahr nicht auszuschließen. Hingegen ist für einen Floristen die Ausführungsform mit verlängerter Klinge, gegebenenfalls zu beiden Seiten, vorteilhaft, da er Blätter ergonomisch abschneiden kann und die Kürzung vornehmen kann. Erfindungswesentlich ist in diesem Zusammenhang, dass für den jeweiligen Anwendungsfall und Einsatzzweck die entsprechend angepassten und ausgebildeten Klingen unterschiedlicher Bauart auf dem Kopf des Blumenanschneiders festgelegt und/oder befestigt werden können.

Im Zusammenhang mit seitlich verlängerten Klingen ist die halbmondförmige oder bauchförmige Erweiterung 32 von besonderer Bedeutung. Sie bildet nämlich einen Anschlag, wodurch die seitlich herausstehende Klinge bzw. deren Teil 40 leicht in verschiedenen Winkeln an das Schneidgut herangeführt werden kann bzw. der zum Blumenstiel im Wesentlichen parallele Handgriff 2 leichter geführt werden kann. Weiterhin ist der Blumenanschneider, und zwar auch die Version mit seitlich verlängerter Klinge, sowohl für Rechts- als auch für Linkshänder geeignet, wofür in einfacher Weise eine Ummontage der Klingen vorgenommen werden muss.

Im Rahmen der Erfindung ist die Klinge flexibel und/oder elastisch auf dem Kopf 6 mittels der Befestigungselemente 30, insbesondere Schrauben, beabstandet zueinander befestigt. Hierdurch wird erreicht, dass sich die Klinge 8 leicht biegen bzw. aufbiegen kann, wodurch das Einführloch und/oder die Öffnung am Kopfende vergrößert wird und die Klinge 8 sich um den Blumenstiel herum legen kann. Durch diese Maßnahme wird das Einführen auch von vergleichsweise dicken Blumenstielen erleichtert. Beim Herausziehen kann sich die Klinge in Gegenrichtung aufbiegen, wodurch das Loch bzw. die Öffnung verkleinert wird und der Schneidprozess erleichtert wird. Die Klinge 8 wird beim Anschnitt konkav in den Blumenstiel eingebracht, wodurch zudem eine verbesserte Wasseraufnahme ermöglicht wird. Es kommt hinzu, dass die Aussparung 36 der Klinge und ferner auch die geringe Dicke der Klinge 8 eine verbesserte Flexibilität bewirken. In einer weiteren Ausgestaltung ist das dem verlängerten Teil 40 der Klinge 8 zugeordnete Loch 44 für die Schraube als Langloch parallel zur Schneide 10 ausgebildet, wodurch bei besonders dünner Ausbildung der Klingen ein Brechen der Klinge 8 vermieden werden kann.

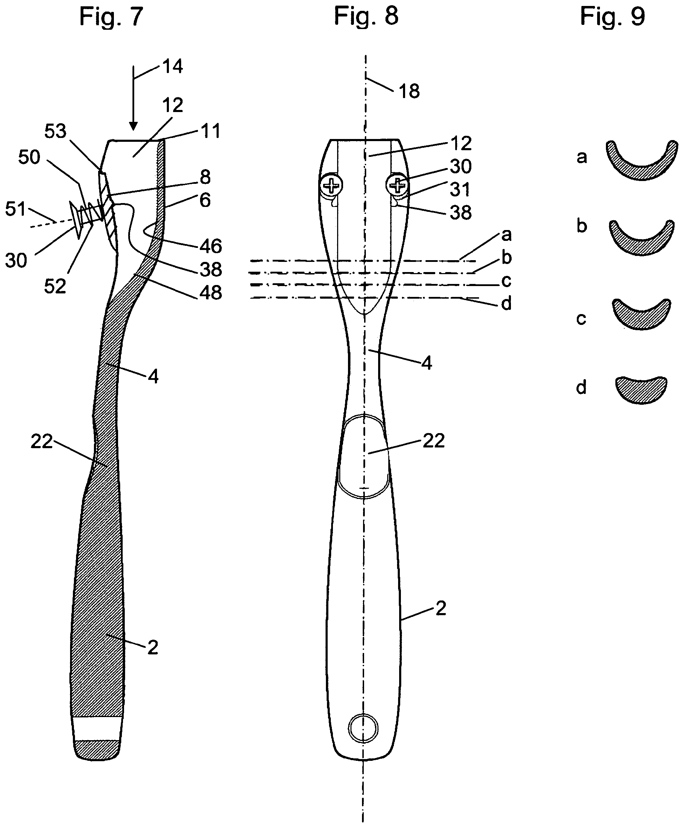

Anhand der Fig. 7 bis 9 wird nunmehr die besondere Geometrie der Längsführung 12 weiter erläutert. Gemäß Fig. 7, welche einen Schnitt in einer durch die Längsachse 18 verlaufenden Schnittebene zeigt, ist der Nutboden 46 als eine Kurve ausgebildet, welche in Richtung zum Handgriff 2 einen zur Längsachse 18 schrägen Bereich 48 aufweist. Von der Öffnung 11 her verläuft der Boden 46 bevorzugt im Wesentlichen axial und geht dann weitgehend kontinuierlich in die Kurve und den schrägen Bereich 48 über. Beim Einführen in Richtung des Pfeiles 14 eines Blumenstiels gelangt dessen Ende an den schrägen und/oder gekrümmten Bereich 48, wobei der Blumenstiel gebogen und an die hier nicht dargestellte Klinge herangeführt wird. Wie ferner aus Fig. 8 ersichtlich, in welcher die Schnittebenen a, b, c, d der in Fig. 9 dargestellten Schnitte eingetragen sind, verringern sich die Krümmungsradien in den quer verlaufenden Schnittebenen in Richtung zum Handgriff 2. Mit anderen Worten, die Längsführung bzw. Nut 12, welche im Bereich der Klinge eine im Wesentlichen gleich bleibende Tiefe und/oder parallel verlaufende Seitenwände aufweist, läuft in Richtung zum Handgriff 2 im schrägen bzw. gekrümmten Bereich bis zu ihrem Ende hin aus. Dieses Ende befindet sich bevorzugt im Bereich des Endes des Kopfes 6 bzw. dem Übergang des Kopfes 6 in den verjüngten Bereich 4.

In Fig. 7 ist eine besondere Weiterbildung der Befestigung der Klinge 8 dargestellt, wobei der Kopf 6 einen Zapfen 50 aufweist. Der Zapfen 50 durchdringt die Bohrung 31 der Klinge 8 und ragt, wie dargestellt, über die Außenfläche der Klinge 8 um einen vorgegebenen Betrag vor. Zwischen dem Kopf der Schraube und der Außenfläche der Klinge 8 ist eine Feder 52 angeordnet. Somit sitzt die Klinge 8 nicht fest, sondern ist wippend gelagert, so dass die Klinge radial nach außen bewegbar ist und/oder wippend gelagert ist und/oder eine Drehbewegung durchführen kann. Somit wird erreicht, dass Blumenstiele, deren Durchmesser und/oder Dicke größer ist als der Abstand zwischen dem Boden des Hohlraumes 12 und der mittels der Feder 52 an den Kopf 6 gedrückten Klinge 8, in den Hohlraum 12 eingeführt werden kann, da die Klinge 8 entgegen der Federkraft radial nach außen ausweichen kann.

In einer weiteren vorteilhaften Ausführungsform ist die Klinge ohne den vorgenannten Zapfen nicht fest sondern ebenfalls wippend bezüglich des Kopfes 6 gelagert. Hierbei liegt der Schraubenkopf nicht vollständig auf der Außenfläche der Klinge auf, sondern befindet sich in einem vorgegebenen kurzen Abstand zur Außenfläche der Klinge 8 angeordnet, so dass gleichfalls eine Bewegung, insbesondere Drehbewegung der Klinge 8 ermöglicht wird. Der Drehpunkt der Klinge 8 wird bevorzugt im Wesentlichen durch den Hinterschnitt 53 des Kopfes 6 vorgegeben. Zweckmäßig weist die Schraube unterhalb des Schraubenkopfes im Bereich des vorgegebenen Abstandes und bevorzugt auch im Bereich der Klinge 8 keine Gewindegänge auf, damit die erläuterte Bewegbarkeit der Klinge 8 nicht beeinträchtigt wird. Auch bei dieser Ausführungsform wird der Drehpunkt der Klinge 8 bevorzugt durch den genannten Hinterschnitt 53 gegeben.

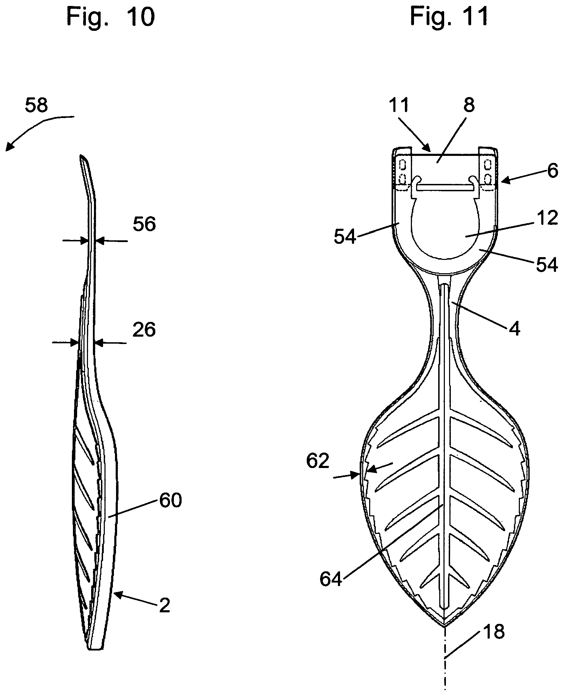

Figur 10 und 11 zeigen eine Seitenansicht und eine Ansicht in Richtung auf die Vorderseite einer besonderen Ausgestaltung des Blumenanschneiders. Der Handgriff 2 ist nach Art eines Blumenblattes und/oder ausgebildet und geht nach oben bzw. zur Mitte der Längserstreckung in den verjüngten Bereich 4 über. Der Kopf 6 ist als Gabel und/oder im Wesentlichen und/oder näherungsweise U-förmig ausgebildet, wobei am oberen oder vorderen Ende 7 die Klinge 8 angeordnet ist. Der Kopf bzw. die Gabel mit dem Schenkeln 54 sind, wie aus der Seitenansicht gemäß Fig. 10 unmittelbar ersichtlich, sehr dünn ausgebildet und weisen, insbesondere im Vergleich mit dem Handgriff 2, eine vergleichsweise geringe Steifigkeit auf. Abgesehen von der aus mit Metall bestehenden Klinge besteht der Blumenanschneider aus einem elastischen und/oder festerelastischen Material. Als Material gelangen in bevorzugter Weise zugfeste und/oder elastische und/oder federnde Kunststoffe zum Einsatz, wie insbesondere POM, glasfaserverstärktes PA, reines PA oder PP. Es ist von besonderer Bedeutung, dass durch die gemäß der Seitenansicht 10 dünne Ausbildung und/oder die geringe Materialdicke 56 des Kopfes 6 eine Biegerichtung 58 vorgegeben ist. Durch das Verkanten einer Blume und/oder die dünne Wasserstärke und/oder das Material ist der Winkel der Klinge 8 und/oder deren Schneide 10 variabel, wodurch ein optimaler Schnittwinkel erreicht wird. Erfindungsgemäß wird durch die dünne Wandstärke und/oder durch die und/oder federelastische Ausbildung bzw. Vorgabe des Materials, insbesondere des Kunststoff oder Metalls, der Anschnittwinkel an der anzuschneidenden Blume durch Vorgabe des vom Handgriff 2 eingeleiteten Hebeldrucks vorgegeben und/oder variiert. Es sei besonders darauf hingewiesen, dass die Spitze und/oder Schneide 10 der Klinge 8 in bevorzugter Weise in Flucht mit dem Kopf 6 und/oder den Schenkeln 54 angeordnet ist, wobei letztere sich bei Einwirkung einer Zugkraft gerade ziehen.

Der erfindungsgemäße Blumenanschneider zeichnet sich durch geringe Wanddicken und/oder Materialdicken aus, wodurch in bevorzugter Weise Produktionskosten reduziert werden. In Folge der dünnen Wandstärke und/oder in Kombination mit dem federnden und/oder federelastischen Werkstoff, insbesondere Kunststoff, ist der Anschnittwinkel der anzuschneidenden Blume durch den vom Hangriff her einwirkende Hebeldruck vorgebbar und/oder variabel. In bevorzugter Weise enthält der Handgriff 2 einen von der übrigen Oberfläche im Wesentlichen rechtwinklig abstehenden Rand 60, welcher ebenfalls die geringe Wanddicke 62 aufweist. Wie aus Figur 10 ersichtlich, ist der bevorzugt blattförmig ausgebildete Handgriff 2, bezogen auf seine Oberfläche, gewölbt ausgebildet. Somit weist der Handgriff 2 eine im Vergleich mit dem verjüngten Bereich 4 und/oder dem Kopf 6 eine erheblich höhere Steifigkeit auf. Des Weiteren enthält der Handgriff 2 in vorteilhafter Weise Rippen 64, welche insbesondere als Vertiefungen und/oder Erhöhungen bezogen auf die Oberfläche ausgebildet sind und welche somit zusätzlich oder alternativ eine Erhöhung der Steifigkeit ergeben. Im Übrigen gelten die Erläuterungen der vorgenannten Ausführungsbeispiele analog.

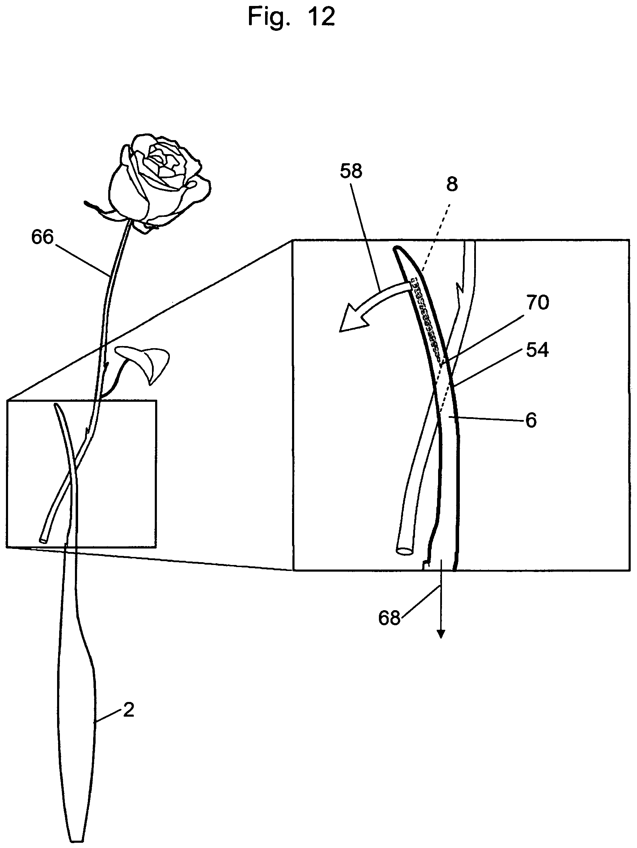

Figur 12 zeigt links den Blumenanschneider zusammen mit einer schematisch angedeuteten Blume 66, wobei rechts vergrößert der Bereich des Kopfes 6 mit dem eingeführten Blumenstil gezeigt ist. Wird beim Anschneiden eine Zugkraft in Richtung des Pfeiles 68 auf den Blumenstil ausgeübt, so wird der Blumananschneider bzw. der Kopf 6 in der Biegerichtung 58 gebogen. Es sei besonders darauf hingewiesen, dass die Spitze 66 der Klinge 8 mit den Schenkeln 54 fluchtet. Hierbei kann die Schneide der Klinge in einem vorgegebenen Winkel angeschrägt ausgebildet sein, wobei dieser Winkel bevorzugt im Bereich von 12° Grad plus oder minus 5° Grad vorgegeben werden kann.

Es sei ausdrücklich hervorgehoben, dass jedes anhand eines der Ausführungsbeispiele erläuterten Merkmal in sinnfälliger Weise und/oder für die jeweiligen Anforderungen und/oder Verwendungszwecke auch für jedes andere Ausführungsbeispiel im Rahmen der Erfindung vorgesehen werden kann. Jede zur Lösung der zu Grunde liegenden Aufgabe geeignete Merkmalskombination der erläuterten Einzelmerkmale ist Gegenstand der Erfindung.

### Bezugszeichen

- 2: Handgriff
- 4: verjüngter Bereich
- 6: Kopf
- 7: vorderes Ende von 6
- 8: Klinge
- 10: Schneide
- 11: Öffnung in 6
- 12: Hohlraum / Längsführung / Längsnut in 6
- 14: Pfeil
- 16: Winkel
- 18: Längsachse
- 20: Gesamtlänge
- 22: konkave Einbuchtung
- 24: Pfeil
- 26: Materialdicke von 4 (Fig. 2)
- 28: Materialdicke von 4 (Fig. 1)
- 30: Befestigungselement / Schraube
- 31: Bohrung in 8
- 32: Erweiterung an 6
- 34: Tiefe von 6
- 36: Aussparung in 8
- 37: Steg
- 38: Aussparung in 6
- 39, 39': Kerbe
- 40: Teil von 8
- 41: Zahn
- 42: Länge / Überstand von 40
- 44: Langloch in 8
- 46: Nutboden
- 48: Schräge / gekrümmter Bereich von 46
- 50: Zapfen
- 51: Zapfenachse
- 52: Feder
- 53: Hinterschnitt
- 54: Schenkel von 6
- 56: Materialdicke von 6
- 58: Biegerichtung
- 60: Rand
- 62: Wanddicke
- 64: Rippe
- 66: Blume
- 68: Pfeil/Zugkraft
- 70: Spitze

## Patentansprüche

1. Blumenanschneider, enthaltend einen Handgriff (2) und einen mit diesem verbundenen Kopf (6), an welchem eine Klinge (8) mit einer Schneide (10) angeordnet ist, wobei ein an die Schneide (10) herangeführter Endbereich eines Blumenstiels durch eine am Handgriff (2) eingeleitete Zugkraft an- oder abschneidbar ist, wobei der Kopf (6) am vorderen Ende eine Öffnung (11) aufweist, durch welche der Blumenstiel im Wesentlichen in axialer Richtung in den Kopf (6) und vorbei an der Klinge (8) mit der Schneide (10) einführbar ist, und wobei im Kopf (6) anschließend an die Öffnung (11) ein Hohlraum (12) vorgesehen Ist, welcher von der Klinge (8) übergriffen wird und/oder in welchen zumindest die Schneide (10) der Klinge (8) hineinragt,
**dadurch gekennzeichnet, dass**
der Kopf (6) im Bereich der Schneide (10) seitlich zu dieser eine Aussparung (38) aufweist und dass die Schneide (10) im Bereich und nahe ihres Kontaktes zum Material des Kopfes (6) eine Aussparung (36) aufweist.

2. Blumenanschneider nach Anspruch 1, **dadurch gekennzeichnet, dass** die Öffnung (11) und/oder der Hohlraum (12) als Führung des Blumenstiels quer zur Längsachse (18) ausgebildet sind, insbesondere derart, dass eine Bewegung oder Ausrichtung in seitlicher Richtung nach außen unterbunden wird und/oder dass der Hohlraum (12) als eine sich im Wesentlichen in Richtung der Längsachse (18) erstreckende und am vorderen Ende des Kopfes (6) die Öffnung (11) aufweisende Längsnut ausgebildet ist und/oder dass der Kopf (6) über einen bevorzugt verjüngten Bereich (4) mit dem Handgriff (2) verbunden ist.

3. Blumenanschneider nach Anspruch 1 oder 2, **dadurch gekennzeichnet, dass** der Hohlraum (12) als eine Längsführung ausgebildet ist und/oder im Bereich einer Vorderseite des Blumenanschneiders in radialer Richtung offen ausgebildet ist und dass die Klinge (8) im Bereich der Vorderseite angeordnet ist und dort den offenen Hohlraum (12) übergreift und/oder zumindest mit der Schneide (10) in den Hohlraum (12) und/oder die Längsnut eingreift.

4. Blumenanschneider nach einem der Ansprüche 1 bis 3, **dadurch gekennzeichnet, dass** der Kopf (6) im Bereich der Vorderseite wenigstens eine, bevorzugt zwei diametral angeordnete Erweiterungen (32) für Befestigungselemente (30) der Klinge (8) aufweist, wobei die Erweiterung (32) bevorzugt halbmondförmig oder bauchförmig ausgebildet sind und/oder dass der Kopf (6) zumindest im Bereich der Klinge (8) einen im Wesentlichen U-förmigen Querschnitt aufweist.

5. Blumenanschneider nach einem der Ansprüche 1 bis 4, **dadurch gekennzeichnet, dass** der Kopf (6) und / oder Hohlraum (12) derart ausgebildet sind, dass eine Schräge oder Kurve (48) vorgesehen ist, mittels welcher das Heranführen des Blumenstiels an die Schneide (10) unterstützt wird, wobei der Blumenstiel gebogen wird und insbesondere gekrümmt, ähnlich einer Feder, an die Schneide (10) herangeführt wird und/oder dass die Kurve oder der gekrümmte Bereich (48) als S-Kurve und / oder eine Doppel-S-Wellung ausgebildet ist, wobei bevorzugt eine seitliche im Wesentlichen halbkreisförmige oder U-förmige Führung vorgesehen ist, welche in eine Doppel-S-Führung übergeht.

6. Blumenanschneider nach einem der Ansprüche 1 bis 5, **dadurch gekennzeichnet, dass** der Kopf (6) am vorderen Ende (7) wenigstens eine Kerbe (39, 39') und/oder Steg (37) aufweist.

7. Blumenanschneider nach einem der Ansprüche 1 bis 6, **dadurch gekennzeichnet, dass** der Handgriff (2) eine Einkerbung und / oder konkave Einbuchtung (22) aufweist, und / oder dass insbesondere aufgrund des verjüngten Bereiches (4) eine hinreichende Flexibilität und / oder Elastizität derart vorgegeben ist, dass infolge einer insbesondere im Bereich der konkaven Einbuchtung (22) einwirkenden Druckkraft, welche bevorzugt mittels eines Daumens aufgebracht werden kann, der Schneidwinkel der Klinge (8) veränderbar und / oder vorgebbar ist.

8. Blumenanschneider nach einem der Ansprüche 1 bis 7, **dadurch gekennzeichnet, dass** der verjüngte Bereich (4) im Querschnitt halbmondförmig oder halbkreisförmig oder rechteckförmig oder U-förmig oder ovalförmig derart ausgebildet ist, dass bei seitlicher Ansicht die Materialdicke (26) geringer ist als bei einer Aufsicht auf die Vorderseite und / oder dass der verjüngte Bereich (4) in zwei oder mehr Verjüngungen aufgeteilt ist.

9. Blumenanschneider nach einem der Ansprüche 1 bis 8, **dadurch gekennzeichnet, dass** mit dem Kopf (6) mittels eines Schnellwechselsystems die Klinge (8) verbunden ist, welche insbesondere durch Biegung in den Kopf (6) einlegbar ist und in einer Endposition gerade gezogen ist, und / oder dass insbesondere im Material des Kopfes Zapfen (50) vorgesehen sind und die Klinge (8) korrespondierende Aussparungen aufweist und / oder dass die Klinge (8) mittels Filmscharnieren oder dergleichen im oder auf dem Kopf (6) festgelegt ist und/oder dass zwischen der Klinge (8) und dem Kopf (6) eine Feder (52) angeordnet ist.

10. Blumenanschneider nach einem der Ansprüche 1 bis 9, **dadurch gekennzeichnet, dass** das Material der Klinge (8) im Bereich der Befestigungselemente (30) und/oder eines Zapfens (50) derart dünn vorgegeben ist, dass der Abstand der Befestigungen und/ oder Aufhängungen der Klinge (8) im Abstand flexibel ausgebildet sind.

11. Blumenanschneider nach einem der Ansprüche 1 bis 10, **dadurch gekennzeichnet, dass** die Klinge (8) in einem vorgegebenen Winkel (16) zur Längsachse (18) angeordnet ist, welcher zweckmäßig im Bereich zwischen 8 bis 18°, bevorzugt zwischen 10 bis 15°, insbesondere zumindest näherungsweise mit 12° vorgegeben ist, wobei die Schneide (10) in Richtung zum Handgriff (2) weist.

12. Blumenanschneider nach einem der Ansprüche 1 bis 11, **dadurch gekennzeichnet, dass** die Klinge (8), welche den überstehenden Teil (40) aufweist, auf der Seite des genannten Teils (40) zur Befestigung mittels des Befestigungselements (30) ein Langloch (44) aufweist, welches im Wesentlichen parallel zur Schneide (10) verläuft.

13. Blumenanschneider nach einem der Ansprüche 1 bis 12, **dadurch gekennzeichnet, dass** die Schneide (10) konkav derart ausgebildet ist, dass der Blumenstiel im Wesentlichen in der Mitte des Kopfes (6) und / oder dessen Hohlraum (12) gehalten wird, wobei alternativ eine konvexe Klinge vorgesehen ist.

14. Blumenanschneider nach einem der Ansprüche 1 bis 13, **dadurch gekennzeichnet, dass** die Klinge (8) an wenigstens einer Seite einen verlängerten Teil (40) aufweist, welcher in einer vorgegebenen Länge (42) über dem Kopf (6) vorsteht und/oder dass mit dem Kopf (6) wahlweise die Klinge (8) mit einem überstehenden Teil (40) oder ohne einen derartigen Teil verbunden oder verbindbar ist.

15. Blumenanschneider nach einem der Ansprüche 1 bis 14, **dadurch gekennzeichnet, dass** die Klinge (8) eine vorgegebene geringe Dicke aufweist, vorzugsweise im Bereich von 0,1 bis 0,8 mm, insbesondere im Bereich von 0,15 bis 0,6 mm.

## Claims

1. A flower trimmer comprising a handle (2) and connected thereto a head (6) on which a blade (8) with a cutting edge (10) is arranged, wherein an end area of a flower stem applied to the cutting edge (10) can be trimmed or cut off though a tensile force exerted on the handle (2), wherein at the front end the head (6) has an opening (11) through which the flower stem can be inserted essentially in the axial direction into the head (6) and past the blade (8) with the cutting edge (10), and wherein in the head (6), adjoining the opening (11), a cavity (12) is provided which is spanned by the blade (8) and/or into which at least the cutting edge (10) of the blade (8) projects,
**characterised in that**
in the area of the cutting edge (10), laterally thereof the head (6) has a recess (38) and
**in that** in the area of and close to its contact to the material of the head (6), the cutting edge (10) has a recess (36).

2. The flower trimmer according to claim 1, **characterised in that** the opening (11) and/or the cavity (12) are configured as a guide for the flower stem transversely to the longitudinal axis (18), in particular in such a way that a movement or alignment laterally outwards is prevented and/or that the cavity (12) is configured as a longitudinal groove essentially extending in the direction of the longitudinal axis (18) and having the opening (11) on the front end of the head (6) and/or that the head (6) is connected to the handle (2) by way of a preferably tapered area (4).

3. The flower trimmer according to claim 1 or 2, **characterised in that** the cavity (12) is configured as a longitudinal guide and/or in the area of a front side of the flower trimmer is open in the radial direction and **in that** blade (8) is arranged in the area of the front side and there spans the open cavity (12) and/or at least protrudes with the cutting edge (10) into the cavity (12) and/or the longitudinal groove.

4. The flower trimmer according to any one of claims 1 to 3, **characterised in that** in the area of the front side the head (6) has at least one, preferably two diametrically arranged extensions (32) for fastening elements (30) of the blade (8), wherein the extensions (32) are preferably half-moon-shaped or bulged and/or in that at least in the area of the blade (8) the head (6) has an essentially U-shaped cross-section.

5. The flower trimmer according to any one of claims 1 to 4, **characterised in that** the head (6) and/or the cavity (12) are configured in such a way that a slope or curve (48) is provided by means of which applying the flower stem to the cutting edge (10) is supported, wherein the flower stem is bent and in particular is applied to the cutting edge (10) arched, similar to spring, and/or **in that** the curved or the arched area (48) is in the form of an S-curve and/or a double S-undulation, wherein preferably a lateral, essentially half-moon-shaped or U-shaped guide is provided which transforms into a double-S guide.

6. The flower trimmer according to any one of claims 1 to 5, **characterised in that** on the front end (7) the head (6) has at least one notch (39, 39') and/or web (37).

7. The flower trimmer according to any one of claims 1 to 6, **characterised in that** the handle (2) has an indentation and/or a concave recess (22) and/or **in that** particularly as a result of the tapered area (4) sufficient flexibility and/or elasticity pre-exists so that through a pressure force which can preferably be exerted by means of a thumb and acting especially in the area of the concave recess (22), the cutting angle of the blade (8) is changeable and/or predeterminable.

8. The flower trimmer according to any one of claims 1 to 7, **characterised in that** the tapered area (4) which is half-moon-shaped or semi-circular or rectangular or U-shaped or oval-shaped in cross section is configured in such a way that when viewed from the side the material thickness (26) is smaller than in a view from above of the front side and/or that the tapered area (4) is divided into two or more tapers.

9. The flower trimmer according to any one of claims 1 to 8, **characterised in that** connected to the head (6) by means of a quick change system is the blade (8), which can be inserted into the head (6) in particular through bending and is pulled straight in an end position, and/or **in that** pins (50) are provided in particular in the material of the head and the blade (8) has corresponding recesses and/or **in that** the blade (8) is fastened in or on the head (6) by means of film hinges or suchlike and/or **in that** a spring (52) is arranged between the blade (8) and the head (6) .

10. The flower trimmer according to any one of claims 1 to 9, **characterised in that** in the area of the fastening elements (30) and/or a pin (50) the material of the blade (8) is so thin that the spacing of the fastenings and/or suspensions of the blade (8) is flexible in terms of distance.

11. The flower trimmer according to any one of claims 1 to 10, **characterised in that** the blade (8) is arranged at a predetermined angle (16) relative to the longitudinal axis (18) which is expediently in the range between 8 and 18°, preferably between 10 and 15°, more particularly is defined as at least approximately 12°, wherein the cutting edge (10) faces in the direction of the handle (2).

12. The flower trimmer according to any one of claims 1 to 11, **characterised in that** the blade (8), which comprises the projecting part (40), has on the side of said part (40) an elongated hole (44), extending essentially in parallel to the cutting edge (10), for fastening by means of the fastening element (30).

13. The flower trimmer according to any one of claims 1 to 12, **characterised in that** the cutting edge (10) is concavely designed in such a way that the flower stem is essentially held in the middle of the head (6) and/or its cavity (12), wherein alternatively a convex blade is provided.

14. The flower trimmer according to any one of claims 1 to 13, **characterised in that** on at least one side the blade (8) has an extended part (40) which projects by a predetermined length (42) over the head (6) and/or that alternatively the blade (8) is connected to or can be connected to the head (6) with a projecting part (40) or without such a part.

15. The flower trimmer according to any one of claims 1 to 14, **characterised in that** the blade (8) has a predetermined small thickness, preferably in the range of 0.1 to 0.8 mm, in particular in the range from 0.15 to 0.6 mm.

## Revendications

1. Dispositif de coupe en biseau de tiges de fleurs, contenant un manche (2) et une tête (6) assemblée avec celui-ci, sur laquelle est placée une lame (8), pourvue d'un tranchant (10), une zone d'extrémité d'une tige de fleur ramenée vers le tranchant (10) étant susceptible d'être entamée ou coupée par une force de traction initiée sur le manche (2), sur l'extrémité antérieure, la tête (6) comportant un orifice (11), à travers lequel la tige de la fleur est insérable dans la tête (6) et à l'avant de la lame (8) pourvue du tranchant (10), sensiblement en direction axiale et dans la tête (6) étant prévue dans la continuité de l'orifice (11) une cavité (12) laquelle est recouverte par la lame (8) et/ou dans laquelle saillit au moins le tranchant (10) de la lame (8),
**caractérisé en ce que**
dans la zone du tranchant (10), latéralement de celui-ci, la tête (6) comporte une encoche (38) et
**en ce que** dans la zone proche de son contact avec la matière de la tête (6), le tranchant (10) comporte un évidement (36).

2. Dispositif de coupe en biseau de tiges de fleurs selon la revendication 1, **caractérisé en ce que** l'orifice (11) et/ou la cavité (12) sont conçus sous la forme d'un guide de la tige de fleur, à la transversale de l'axe longitudinal (18), notamment de telle sorte qu'un déplacement ou un alignement dans la direction latérale vers l'extérieur soit empêché et/ou **en ce que** la cavité (12) est conçue sous la forme d'une rainure longitudinale s'étendant sensiblement dans la direction de l'axe longitudinal (18) et comportant l'orifice (11) sur l'extrémité antérieure de la tête (6) et/ou **en ce que** la tête (6) est assemblée avec le manche (2) par l'intermédiaire d'une zone (4) de préférence rétrécie.

3. Dispositif de coupe en biseau de tiges de fleurs selon la revendication 1 ou 2, **caractérisé en ce que** la cavité (12) est conçue sous la forme d'un guide longitudinal et/ou dans la zone d'une face avant du dispositif de coupe en biseau de tiges de fleurs, est conçue en étant ouverte dans la direction radiale et **en ce que** la lame (8) est placée dans la zone de la face avant et y recouvre la cavité (12) ouverte et/ou s'engage au moins par le tranchant (10) dans la cavité (12) et/ou dans la rainure longitudinale.

4. Dispositif de coupe en biseau de tiges de fleurs selon l'une quelconque des revendications 1 à 3, **caractérisé en ce que** dans la zone de la face avant, la tête (6) comporte au moins un, de préférence deux élargissements (32) placés diamétralement, destinés à des éléments de fixation (30) de la lame (8), l'élargissement (32) étant conçu de préférence en forme de demi-lune ou de forme ventrue et/ou **en ce que** la tête (6) possède au moins dans la zone de la lame (8) une section transversale en forme de U.

5. Dispositif de coupe en biseau de tiges de fleurs selon l'une quelconque des revendications 1 à 4, **caractérisé en ce que** la tête (6) et/ou la cavité (12) sont conçues de telle sorte qu'il est prévu une oblique ou une courbe (48), au moyen de laquelle l'approche de la tige de la fleur vers le tranchant (10) est assistée, la tige de la fleur se recourbant et étant amenée sous forme incurvée, à la manière d'un ressort vers le tranchant (10) et/ou **en ce que** la courbe ou la zone incurvée (48) est conçue sous la forme d'une courbe en forme de S et/ou d'une ondulation en double S, étant prévu de préférence un guide latéral sensiblement en forme de demi-cercle ou en forme de U, qui passe en un guide en double S.

6. Dispositif de coupe en biseau de tiges de fleurs selon l'une quelconque des revendications 1 à 5, **caractérisé en ce que** sur l'extrémité antérieure (7), la tête (6) comporte au moins une entaille (39, 39') et/ou une barrette (37).

7. Dispositif de coupe en biseau de tiges de fleurs selon l'une quelconque des revendications 1 à 6, **caractérisé en ce que** le manche (2) comporte une indentation et/ou une échancrure concave (22) et/ou **en ce que** notamment du fait de la zone rétrécie (4), une souplesse et/ou élasticité suffisante est prédéfinie de telle sorte qu'en réponse à une force de pression agissant notamment dans la zone de l'échancrure concave (22), laquelle peut être exercée notamment à l'aide d'un pouce, l'angle de coupe de la lame (8) soit variable et/ou prédéfinissable.

8. Dispositif de coupe en biseau de tiges de fleurs selon l'une quelconque des revendications 1 à 7, **caractérisé en ce que** la zone rétrécie (4) est conçue avec une section transversale en forme de demi-lune ou en forme de demi-cercle ou de forme rectangulaire ou en forme de U ou en forme ovale, de telle sorte qu'en vue latérale, l'épaisseur de matière (26) soit plus réduite que vue en élévation sur la face antérieure et/ou **en ce que** la zone rétrécie (4) est divisée en deux rétrécissements ou plus.

9. Dispositif de coupe en biseau de tiges de fleurs selon l'une quelconque des revendications 1 à 8, **caractérisé en ce que** la lame (8) qui est insérable dans la tête (6) notamment par flexion et qui dans une position extrême est tirée en position droite est assemblée avec la tête (6) à l'aide d'un système de changement rapide, et/ou **en ce que** notamment dans la matière de la tête sont prévus des tenons (50) et **en ce que** la lame (8) comporte des évidement correspondants et/ou en ce que la lame (8) est immobilisée dans ou sur la tête (6) à l'aide de charnières pelliculaires ou similaires et/ou **en ce qu'**entre la lame (8) et la tête (6) est placé un ressort (52).

10. Dispositif de coupe en biseau de tiges de fleurs selon l'une quelconque des revendications 1 à 9, **caractérisé en ce que** dans la zone des éléments de fixation (30) et/ou d'un tenon (50), la matière de la lame (8) est prédéfinie avec une minceur telle que l'écart entre les fixations et/ou les dispositifs d'accrochage de la lame (8) soient conçus avec un écart flexible.

11. Dispositif de coupe en biseau de tiges de fleurs selon l'une quelconque des revendications 1 à 10, **caractérisé en ce que** la lame (8) est placée avec un angle (16) prédéfini par rapport à l'axe longitudinal (18) qui est opportunément prédéfini dans l'ordre compris entre 8 et 18°, de préférence entre 10 et 15°, notamment au moins approximativement à 12°, le tranchant (10) étant dirigé vers le manche (2).

12. Dispositif de coupe en biseau de tiges de fleurs selon l'une quelconque des revendications 1 à 11, **caractérisé en ce que** la lame (8) qui comporte la partie débordante (40) comporte sur le côté de ladite partie (40), à des fins de fixation à l'aide de l'élément de fixation (30) un trou oblong (44) qui s'écoule sensiblement à la parallèle du tranchant (10) .

13. Dispositif de coupe en biseau de tiges de fleurs selon l'une quelconque des revendications 1 à 12, **caractérisé en ce que** le tranchant (10) est conçu de forme concave, de telle sorte que la tige de fleur soit maintenue sensiblement au centre de la tête (6) et/ou dans la cavité (12) de celle-ci, en variante étant prévue une lame convexe.

14. Dispositif de coupe en biseau de tiges de fleurs selon l'une quelconque des revendications 1 à 13, **caractérisé en ce que** sur au moins un côté, la lame (8) comporte une partie rallongée (40) qui déborde d'une longueur prédéfinie (42) par-dessus la tête (6) et/ou **en ce qu'**au choix, la lame (8) est assemblée ou susceptible d'être assemblée avec la tête (6) par une partie débordante (40) ou sans une telle partie.

15. Dispositif de coupe en biseau de tiges de fleurs selon l'une quelconque des revendications 1 à 14, **caractérisé en ce que** la lame (8) possède une faible épaisseur prédéfinie, de préférence de l'ordre de 0,1 à 0,8 mm, notamment de l'ordre de 0,15 à 0,6 mm.
